# EUROPÄISCHE PATENTSCHRIFT

(11) **EP 1 288 056 B1**
(45) Veröffentlichungstag und Bekanntmachung des Hinweises auf die Patenterteilung: **07.05.2008**
(21) Anmeldenummer: 02018887.6
(22) Anmeldetag: 24.08.2002
(51) Int. Cl.: B60K 31/00, B60T 7/12

(54) **Verfahren zur Steuerung und/oder Regelung der Fahrzeuggeschwindigkeit**
Method for controlling vehicle speed
Procédé de régulation de la vitesse d'un véhicule

(30) Priorität: 29.08.2001 DE 10142274
(43) Veröffentlichungstag der Anmeldung: 05.03.2003
(73) Patentinhaber: ZF FRIEDRICHSHAFEN AG, 88038 Friedrichshafen (DE)
(72) Erfinder: Grupp, Bernhard, 88250 Weingarten (DE); Sauter, Frank, 88074 Meckenbeuren (DE); Reisch, Bernhard, 88316 Isny (DE); Schmidtner, Peter, 88131 Lindau (DE)

(56) Entgegenhaltungen:
- DE-A1- 19 528 183
- GB-A- 2 350 700
- US-A- 5 019 985
- US-A- 5 944 766
- US-A- 6 076 036

## Beschreibung

Die vorliegende Erfindung betrifft ein Verfahren zur Steuerung und/oder Regelung der Fahrzeuggeschwindigkeit für ein Kraftfahrzeug gemäß dem Oberbegriff des Patentanspruchs 1.

Heutzutage werden zur Erhöhung der Sicherheit und des Komforts für den Fahrer verstärkt Fahrerassistenzsysteme eingesetzt. Darunter fallen Verfahren zur Einhaltung einer vorgegebenen Sollgeschwindigkeit, welche die Bremssysteme und das Gas derart beeinflussen, dass die Fahrzeuggeschwindigkeit einen bestimmten Wert nicht über- bzw. unterschreitet. Hierfür werden Bremsomat- bzw. Tempomateinrichtungen eingesetzt.

Beispielsweise beschreibt die DE 4420116 der Anmelderin ein Verfahren zur Vermeidung der Überschreitung einer vorgegebenen Sollgeschwindigkeit eines Kraftfahrzeugs mit Betriebsbremsen und zusätzlichen Verzögerungseinrichtungen beim Fahren hügelabwärts, bei dem Schubbetrieb registriert wird und beim Umschalten auf Schubbetrieb die Momentangeschwindigkeit als Sollgeschwindigkeit gespeichert wird, wobei die zusätzlichen Verzögerungseinrichtungen einzeln oder in Kombinationen derart gesteuert werden, dass die Momentangeschwindigkeit die Sollgeschwindigkeit nicht überschreitet.

Des weiteren ist in der EP 00336913 ein Verfahren und eine Anordnung zum Halten einer konstanten Geschwindigkeit im Gefälle offenbart. Im Rahmen des Verfahrens wird die Bremse vom Fahrer aktiviert, wobei die niedrigste Geschwindigkeit, die das Fahrzeug während des Bremsvorgangs erreicht, als Zielwert in einer Kontrolleinheit gespeichert wird. Die unterschiedlichen Bremssysteme des Fahrzeugs werden über das Bremspedal gesteuert, wobei, je stärker das Bremspedal gedrückt wird, um so stärker die Bremswirkung eines vorhandenen Retarders hinzugeschaltet wird. Zudem ist ein Geschwindigkeits-Kontrollsystem vorgesehen, das Retarder und Auspuffbremse derart steuert, dass die aktuelle Geschwindigkeit der Zielgeschwindigkeit durch Aktivierung aller Bremsen angenähert wird. Wenn zudem der Fahrer das Bremspedal loslässt, wird die Geschwindigkeit gehalten, bis wieder beschleunigt wird.

Bei diesen bekannten Verfahren sind Bremsomat- bzw. Tempomatgeschwindigkeit festdefinierte Sollgrößen; dies resultiert darin, dass die Massenträgheit des Fahrzeugs nicht ausgenutzt wird. Insbesondere werden Schwungspitzen, also ohnehin vorhandene kinetische Energie, nicht genutzt, was einen früheren Beginn des Motorzugbetriebs zur Folge hat. Dadurch erhöhen sich wiederum Kraftstoffverbrauch und Umweltbelastung.

Zur Verbesserung dieser Situation, wird deshalb oft ein fester Offset zwischen Tempomat- und Bremsomatgeschwindigkeit in der Steuerung abgelegt. US-A-6 076 036 zeigt die Merkmale des Oberbegriffs des Anspruchs 1.

Der vorliegenden Erfindung liegt die Aufgabe zugrunde, ein Verfahren zur Steuerung und/oder Regelung der Fahrzeuggeschwindigkeit anzugeben, welches die Nachteile des Standes der Technik vermeidet.

Insbesondere soll das erfindungsgemäße Verfahren vorausschauendes Fahren ermöglichen und eine Reduzierung des Kraftstoffverbrauchs bewirken.

Diese Aufgabe wird durch den kennzeichnenden Teil des Patentanspruchs gelöst. Weitere Varianten gehen aus den Unteransprüchen hervor.

Demnach wird vorgeschlagen, mittels einer Erkennung des Endes einer Gefällestrecke die kinetische und potentielle Energie des Fahrzeugs zur Verbrauchsminimierung zu nutzen.

Hierbei wird die Bremsomatsollgeschwindigkeit in Abhängigkeit vom Fahrzustand und/oder Topographie dynamisch verändert.

Als Eingangsgrößen für die dynamische Regelung/Steuerung der Bremsomatsollgeschwindigkeit dienen neben den Daten des Fahrzeugs, wie beispielsweise aktuelles Gewicht, Hinterachsübersetzung, Reifendurchmesser zusätzlich Daten von Straßeninformationssystemen und/oder Topographiedaten in Verbindung mit einem Navigationssystem.

Zudem können Drehzahlen und Geschwindigkeiten und/oder deren zeitliche Veränderung als Eingangsgrößen berücksichtigt bzw. erfasst und verglichen werden, die den aktuellen Fahrzustand beschreiben. Solche Größen sind beispielsweise die Raddrehzahlen und/oder deren zeitliche Veränderung und die Gelenkwellendrehzahl und deren zeitliche Veränderung.

Als weitere Eingangsgrößen werden bevorzugterweise die aktuell erforderliche Bremskraft und deren zeitliche Veränderung benötigt.

Im Rahmen einer weiteren Variante des erfindungsgemäßen Verfahrens wird der Offset zwischen der Sollgeschwindigkeiten von Bremsomat und Tempomat dynamisch verändert, wobei als Eingangsgrößen die bereits genannten Größen verwendet werden.

Im Rahmen einer weiteren vorteilhaften Variante des erfindungsgemäßen Verfahrens ist eine dynamische Steuerung/Regelung der Tempomatsollgeschwindigkeit vorgesehen. Hierdurch wird die kinetische Energie des Fahrzeugs zur Überwindung einer Steigung gezielt genutzt, da durch die Anhebung der Tempomatsollgeschwindigkeit ein Geschwindigkeitsüberschuss entsteht, mit dem das Fahrzeug in die Steigung einfährt. Diese Steuerung und/oder Regelung der Tempomatsollgeschwindigkeit kann alleine oder in Kombination mit der dynamischen Regelung/Steuerung der Bremsomatsollgeschwindigkeit durchgeführt werden.

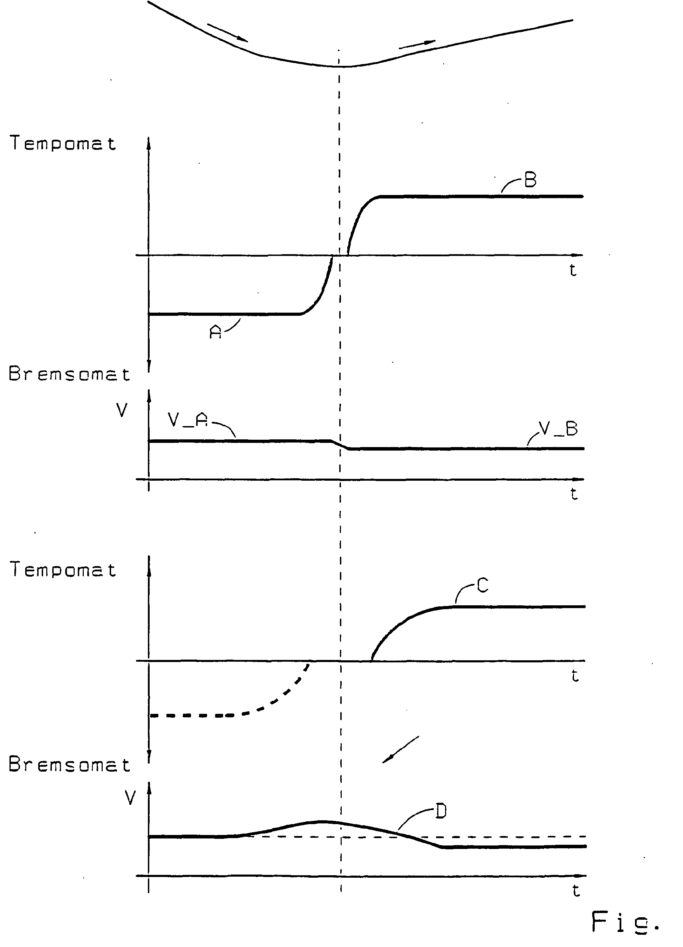

Im folgenden wird die Erfindung anhand der beigefügten Figur näher erläutert, die das Tempomat- bzw. Bremsomat - Ansteuerungssignal als Funktion der Zeit und ein Fahrzeuggeschwindigkeits-Zeitdiagramm darstellt, jeweils nach dem Stand der Technik und dem Verfahren gemäß der Erfindung. Diese Diagramme entsprechen einem im obersten Diagramm gezeigten Straßenverlauf mit einem Gefälle und anschließender Steigung.

Gemäß dem in der Figur wiedergegebenen Stand der Technik ist der Bremsomat noch unmittelbar vor dem Ende bzw. bis zum Ende einer Gefällestrecke aktiviert, was in einer konstanten, vordefinierten Sollgeschwindigkeit resultiert. Die Kurve, die dem Ansteuersignal des Bremsomaten entspricht ist mit A bezeichnet; die entsprechende Fahrzeuggeschwindigkeit v_A ist in dem unteren Diagramm dargestellt. Nach dem Stand der Technik wird der Tempomat ebenfalls unmittelbar beim Beginn der Steigung aktiviert (Kurve B), um eine konstante Fahrzeuggeschwindigkeit v_B (unteres Diagramm) zu gewährleisten.

Die Massenträgheit des Fahrzeugs wird hierbei nicht ausgenutzt, da der Bremsomat bis zum Ende des Gefälles aktiviert ist und die Geschwindigkeit auf den Sollwert beschränkt. Dies hat einen früheren Beginn des Motorzugbetriebs zur Folge hat, mit entsprechend höherem Kraftstoffverbrauch.

Gemäß der vorliegenden Erfindung wird mittels einer Erkennung des Endes einer Gefällestrecke die kinetische und potentielle Energie des Fahrzeugs zur Verbrauchsminimierung genutzt, indem die Bremsomatsollgeschwindigkeit dynamisch geregelt und/oder gesteuert wird. Dies bedeutet, dass der Bremsomat vor dem Ende der Gefällestrecke in Abhängigkeit von Parametern beispielsweise abgeschaltet wird, wodurch sich die Geschwindigkeit erhöht, so dass ein erster Teil der Steigung ohne Motorzugbetrieb gefahren werden kann. Dies wird anhand der Figur deutlich: Im dritten Diagramm von oben ist das Bremsomat- und Tempomatansteuersignal für diese Situation als Funktion der Zeit dargestellt. Der Bremsomat wird in diesem Beispiel vor dem Ende der Gefällestreckegesteuert deaktiviert, so dass das Fahrzeug eine höhere Bremsomatsollgeschwindigkeit erreicht. Folglich wird am Ende die potentielle Energie als kinetische Energie genutzt, um die anschließende Steigung zu bewältigen (Kurve C). Auf diese Weise entsteht eine Schwungspitze (angedeutet mit dem Pfeil im Geschwindigkeits-Zeit-Diagramm entlang der Geschwindigkeitskurve D (letztes Diagramm), die dazu beiträgt, dass der Motorzugbetrieb später einsetzt.

Dies wird erfindungsgemäß dadurch erreicht, dass die Bremsomatsollgeschwindigkeit in Abhängigkeit vom Fahrzustand und/oder Topographie dynamisch verändert wird, wobei als Eingangsgrößen Fahrzeugdaten und/oder Daten von Straßeninformationssystemen und/oder Topographiedaten in Verbindung mit einem Navigationssystem dienen.

Zudem können Drehzahlen und Geschwindigkeiten und/oder deren zeitliche Veränderung als Eingangsgrößen berücksichtigt werden, die den aktuellen Fahrzustand beschreiben, wie die Raddrehzahlen und/oder deren zeitliche Veränderung und die Gelenkwellendrehzahl und deren zeitliche Veränderung.

Die aktuell erforderliche Bremskraft und deren zeitliche Veränderung werden auch benötigt, um eine optimale Steuerung/Regelung zu erzielen.

Die beschriebene dynamische Regelung/Steuerung der Bremsomatsollgeschwindigkeit kann auch mit der erfindungsgemäßen dynamischen Steuerung/Regelung der Tempomatsollgeschwindigkeit kombiniert werden. Hierbei wird die kinetische Energie des Fahrzeugs zur Überwindung einer Steigung gezielt genutzt, um durch die Anhebung der Tempomatsollgeschwindigkeit einen Geschwindigkeitsüberschuss zu erreichen, mit dem das Fahrzeug in die Steigung einfährt.

Das Verfahren gemäß der Erfindung kann vorteilhafterweise mit dem Cruise-Control-Modus kombiniert werden. Zudem ermöglicht es eine vorausschauende Fahrweise ohne intensive aktive Beteiligung des Fahrers sowie eine Verbrauchsoptimierung ohne Komforteinbußen.

## Patentansprüche

1. Verfahren zur Steuerung und/oder Regelung der Fahrzeuggeschwindigkeit in Kombination mit einer Bremsomat- und/oder eine Tempomateinrichtung, **dadurch gekennzeichnet, dass** die Bremsomatsollgeschwindigkeit und/oder die Tempomatsollgeschwindigkeit und/oder der Offset zwischen der Bremsomatsollgeschwindigkeit und der Tempomatsollgeschwindigkeit dynamisch verändert wird.

2. Verfahren nach Anspruch 1, **dadurch gekennzeichnet, dass** die Bremsomatsollgeschwindigkeit und/oder die Tempomatsollgeschwindigkeit und/oder der Offset zwischen der Bremsomatsollgeschwindigkeit und der Tempomatsollgeschwindigkeit in Abhängigkeit von den Fahrzeugdaten und/oder dem Fahrzustand und/oder Straßeninformationen und/oder Topographiedaten in Verbindung mit einem Navigationssystem und/oder von der aktuell erforderlichen Bremskraft und deren zeitlichen Veränderung dynamisch verändert werden.

3. Verfahren nach Anspruch 1 oder 2, **dadurch gekennzeichnet, dass** Drehzahlen und Geschwindigkeiten und/oder deren zeitliche Veränderung als Eingangsgrößen berücksichtigt werden, die den aktuellen Fahrzustand beschreiben.

4. Verfahren nach Anspruch 3, **dadurch gekennzeichnet, dass** Raddrehzahlen und/oder deren zeitliche Veränderung und die Gelenkwellendrehzahl und deren zeitliche Veränderung berücksichtigt werden.

5. Verfahren nach einem der vorangehenden Ansprüche, **dadurch gekennzeichnet, dass** die Tempomatsollgeschwindigkeit derart dynamisch-verändert wird, dass die kinetische Energie des Fahrzeugs zur Überwindung einer Steigung gezielt genutzt wird, da durch die Anhebung der Tempomatsollgeschwindigkeit ein Geschwindigkeitsüberschuss entsteht, mit dem das Fahrzeug in die Steigung einfährt.

6. Verfahren nach einem der vorangehenden Ansprüche, **dadurch gekennzeichnet, dass** die Bremsomatsollgeschwindigkeit derart verändert wird, dass bei einer Erkennung des Endes einer Gefällestrecke die kinetische und potentielle Energie des Fahrzeugs genutzt werden, um das Einsetzen des Motorzugbetriebs zu verzögern.

## Claims

1. Method for controlling vehicle speed in combination with a brake and/or cruise control system **characterized in that** nominal brake and/or cruise control speed and/or the offset between nominal brake and cruise control speed is changed dynamically.

2. Method according to claim 1, **characterized in that** the nominal brake and/or cruise control speed and/or the offset between the nominal brake and cruise control speed is dynamically changed depending on the vehicle data and/or the driving condition and/or the road information and /or topographical data in conjunction with a navigation system, and/or depending on the current brake power requirement and its temporal variation.

3. Method according to claim 1 or 2, **characterized in that** speeds and driving speeds and/or their temporal variation are considered as input variables describing the current driving condition.

4. Method according to claim 3, **characterized in that** wheel speeds and/or their temporal variation and the propshaft speeds and their temporal variation are considered.

5. Method according to one of the preceding claims, **characterized in that** the nominal cruise control speed is dynamically changed in such a way that the kinetic engergy of the vehicle is used for climbing an uphill grade, as elevation of the nominal cruise control speed results in excess speed at which the vehicle starts the climb.

6. Method according to one of the preceding claims, **characterized in that** the nominal brake control speed is changed in such a way that when the end of a downhill grade is recognized, the kinetic and potential energy of the vehicle will be used to delay the start of engine traction.

## Revendications

1. Procédé de commande et/ou de réglage de la vitesse de déplacement d'un véhicule en combinaison avec un dispositif Bremsomat et/ou Tempomat, **caractérisé en ce que** la vitesse de consigne du Bremsomat et/ou la vitesse de consigne du Tempomat et/ou la différence entre la vitesse de consigne du Bremsomat et la vitesse de consigne du Tempomat est variée dynamiquement.

2. Procédé selon la revendication 1, **caractérisé en ce que** la vitesse de consigne du Bremsomat et/ou la vitesse de consigne du Tempomat et/ou le décalage entre la vitesse de consigne du Bremsomat et la vitesse de consigne du Tempomat est variée dynamiquement en fonction des données du véhicule et/ou de l'état du véhicule et/ou d'informations sur l'état de la chaussée et/ou de données topographiques en combinaison avec un système de navigation et/ou la force de freinage momentanément nécessaire et les variations de ces données dans le temps.

3. Procédé selon la revendication 1 ou 2, **caractérisé en ce que** les régimes et les vitesses et/ou leur variation dans le temps sont pris en considération comme grandeurs d'entrée, décrivant l'état de conduite actuel.

4. Procédé selon la revendication 3, **caractérisé en ce que** sont pris en considération les régimes de rotation des roues et/ou leur variation dans le temps ainsi que le régime de rotation de l'arbre à cardan et leur variation dans le temps.

5. Procédé selon une des revendications précédentes, **caractérisé en ce que** la vitesse de consigne du Tempomat est variée dynamiquement de façon à ce que l'énergie cinétique du véhicule pour franchir une pente est utilisée de façon ciblée, parce que l'augmentation de la vitesse de consigne du Tempomat apporte un surplus de vitesse, avec lequel le véhicule aborde la montée.

6. Procédé selon une des revendications précédentes, **caractérisé en ce que** la vitesse de consigne du Bremsomat est variée de façon à ce que, en cas de reconnaissance de la fin d'un parcours en descente, les énergies cinétique et potentielle du véhicule sont utilisées pour retarder le début de la phase de traction du moteur.
